# EUROPÄISCHE PATENTSCHRIFT

(11) **EP 3 846 999 B1**
(45) Veröffentlichungstag und Bekanntmachung des Hinweises auf die Patenterteilung: **12.10.2022**
(21) Anmeldenummer: 19759364.3
(22) Anmeldetag: 27.08.2019
(51) Int. Cl.: B29C 48/325, B29C 48/09, B29C 48/25, B29C 48/87, B29C 48/89, B29C 48/88, B29C 48/92, B29C 48/90

(54) **EXTRUSIONSVORRICHTUNG MIT INNENLIEGENDER KÜHLUNG**
EXTRUSION DEVICE HAVING INTERNAL COOLING
DISPOSITIF D'EXTRUSION À REFROIDISSEMENT INTÉRIEUR

(30) Priorität: 03.09.2018 DE 102018121387
(43) Veröffentlichungstag der Anmeldung: 14.07.2021
(73) Patentinhaber: KraussMaffei Extrusion GmbH, 30625 Hannover (DE)
(72) Erfinder: BREUNING, Walter, 85232 Bergkirchen Bayern (DE); GEYER, Mathias, 81245 München Bayern (DE)
(74) Vertreter: Wilhelm, Ludwig
(86) Internationale Anmeldenummer: PCT/EP2019/072751
(87) Internationale Veröffentlichungsnummer: WO 2020/048816

(56) Entgegenhaltungen:
- DE-A1- 19 843 341
- DE-A1-102007 059 187
- DE-B3-102006 049 660
- DE-B3-102006 051 104
- US-A- 4 154 563
- US-A- 5 622 732

## Beschreibung

Die vorliegende Erfindung betrifft eine Extrusionsvorrichtung mit innenliegender Kühlung, insbesondere eine Extrusionsvorrichtung, bei der ein beweglicher Körper vorhanden ist, der zum Formen eines Extrudats bewegt werden kann, und in der ein Extrudat von innen mit Luft gekühlt werden kann.

DE19843341A1 offenbart eine Vorrichtung zur Herstellung von Kunststoffrohren mit einem Extruder, einem sich in Produktionsrichtung an den Extruder anschließenden Rohrkopf und einer Kalibrierstation, wobei während der Produktionsphase der Ringspaltdurchmesser und die Spaltweite des Rohrkopfes verstellbar ist.

DE102007059187A1 beschreibt eine Anordnung und ein Verfahren zum Herstellen eines Schlauches mit einer Düse, die über einen ringförmigen Auslass mit einem Schlauch in Verbindung steht, wobei der Schlauch an dem der Düse gegenüber liegenden Ende eine Halterung aufweist.

Zur Anpassung der Form eines Extrudats ist es bekannt, Extruder einzusetzen, bei denen ein beweglicher Dorn oder Körper gegenüber einer Auslassöffnung für das Extrudat verfahren werden kann. Hierdurch kann insbesondere die Wandstärke und der Durchmesser von extrudierten Kunststoffrohren verändert werden, ohne dass die Förderung der Extrusionsmasse durch den Extruder unterbrochen werden muss. Hierbei besteht aber die Schwierigkeit, den Antrieb für die Bewegung des Dornes und die Zuführung der Extrusionsmasse derart anzuordnen, dass keine Nachteile bei der Fertigung entstehen.

Es sollte nämlich die Zuführung der Extrusionsmasse in einer Linie mit der Auslassöffnung für das Extrudat liegen, um zu verhindern, dass die Extrusionsmasse zu oft umgelenkt werden muss. Dies führt zu einem effizienteren Betrieb der Anlage, da für die Extrusion ein geringerer Druck erforderlich ist, wodurch weniger Energie verbraucht wird. Zudem wird durch die kürzere Verweilzeit der Extrusionsmasse oder Schmelze die Qualität des Extrudats verbessert und die Stellfläche der Extrusionslinie verringert.

Andererseits wird die Bewegung des Dorns typischer Weise ebenfalls über einen Antriebsstrang gesteuert, der in Achse mit dem Pfad der Extrusionsmasse durch den Extruder liegt. Bei einer derartigen Antriebsweise ist es dann nicht mehr möglich, die Extrusionsmasse in Linie mit einer Auslassöffnung zuzuführen, wodurch die oben beschriebenen Vorteile nicht mehr realisiert werden können.

Zusätzlich ist es von Vorteil, wenn das Extrudat durch Luft auf der Innenseite des Extrudats gekühlt werden kann, da dies eine schnellere Weiterverarbeitung des Extrudats erlaubt. Zudem führt eine Innenkühlung des Extrudats zusammen mit einer von außen, z.B. durch das Aufbringen von Wasser, erfolgenden Kühlung zu einer homogeneren Abkühlung, wodurch sich die Qualität des hergestellten Produkts verbessern kann.

Eine derartige Innenkühlung kann z.B. durch das Durchleiten von Kühlmitteln, wie z.B. Luft, durch das Innere des Dorns erfolgen. Um eine effiziente Kühlung des Extrudats zu gewährleisten, ohne die noch zu verformende Extrusionsmasse im Werkzeug zu stark zu kühlen, muss das Kühlmittel jedoch von der Ausstoßseite des Extruders her in den Dorn eingespeist werden. Eine Ableitung sollte typischer Weise in dem Bereich des Werkzeuges erfolgen, der bereits für den Antrieb des Dorns oder die Zuführung der Extrusionsmasse vorgesehen ist.

Eine Aufgabe der vorliegenden Erfindung ist es also, eine Extrusionsvorrichtung anzugeben, die eine Zuführung von Extrusionsmasse erlaubt, die die oben genannten Vorteile aufweist, mit der die Form eines Extrudats während des laufenden Betriebs verändert werden kann und mit der das Extrudat effizient gekühlt werden kann.

Diese Aufgabe wird durch den Gegenstand der unabhängigen Ansprüche gelöst. Vorteilhafte Weiterbildungen sind in den abhängigen Ansprüchen angegeben.

Eine Extrusionsvorrichtung kann aufweisen: einen Masseneinlass zum Zuführen einer Extrusionsmasse in die Extrusionsvorrichtung; einen dem Masseneinlass entlang einer Achse gegenüber angeordneten Massenauslass zum Ausstoßen der Extrusionsmasse aus der Extrusionsvorrichtung; ein Massenleitungssystem zum Führen der Extrusionsmasse von dem Masseneinlass zu dem Massenauslass; einen auf der Achse angeordneten und entlang der Achse bewegbaren Körper, der durch den Massenauslass hindurchtritt und derart ausgebildet ist, dass sich bei Bewegen des Körpers entlang der Achse eine Querschnittsfläche verändert, durch die die Extrusionsmasse aus dem Massenauslass ausgestoßen wird; eine entlang der Achse angeordneten Antriebsvorrichtung zum Bewegen des Körpers entlang der Achse; ein Kühlleitungssystem zum Führen von Kühlmittel. Hierbei ist ein erster Teil des Kühlleitungssystems im Inneren des Körpers angeordnet und geeignet, das Kühlmittel entlang der Achse zu führen, ein zweiter Teil des Kühlleitungssystems ist geeignet, das Kühlmittel von der Achse weg aus dem Körper herauszuführen und um die Antriebsvorrichtung herum zu leiten, und ein dritter Teil des Kühlleitungssystems ist geeignet, das Kühlmittel schräg zur Achse nach außen in eine Ableitung für das Kühlmittel zu führen. Entgegen einer Fließrichtung der Extrusionsmasse von dem Masseneinlass zu dem Massenauslass schließt der zweite Teil des Kühlleitungssystems an den ersten Teil des Kühlleitungssystems an und der dritte Teil des Kühlleitungssystems schließt an den zweiten Teil des Kühlleitungssystems an.

In der Extrusionsvorrichtung wird die Extrusionsmasse also von einem Masseneinlass zu einem Massenauslass geführt, die auf einer Achse liegen. Ebenfalls auf der Achse liegt ein Körper oder Dorn, dessen Lage im Massenauslass die Form, insbesondere Wandstärke, des austretenden Extrudats bestimmt. Durch diese Anordnung ist die Extrusionsvorrichtung kompakt ausgestaltet und die Extrusionsmasse wird schnellstmöglich und ohne unnötige Umlenkungen und Druckverluste durch die Extrusionsvorrichtung gefördert, wodurch Energie eingespart und die Produktqualität verbessert werden kann. Zudem kann durch die Bewegung des Körpers die Form des Extrudats verändert werden, ohne die Förderung der Extrusionsmasse zu unterbrechen.

Gegenläufig zur Fließrichtung der Extrusionsmasse kann die Extrusionsvorrichtung von einem Kühlmittel durchflossen werden. Dieses wird von der Ausstoßseite des Extrudats her in den Körper eingeleitet, bzw. in diesen eingesaugt. Es durchströmt also das aus der Extrusionsvorrichtung bereits ausgestoßene Extrudat, bevor es in den Körper eintritt und kühlt dieses dabei. Das Kühlmittel kann hierbei gasförmig sein. Zum Beispiel kann Luft als Kühlmittel verwendet werden. Alternativ kann das Kühlmittel auch gleichläufig zur Fließrichtung der Extrusionsmasse geführt werden.

Nachdem das Kühlmittel innen im Körper ins Innere der Extrusionsvorrichtung gefördert wurde, wird es radial nach außen geleitet, z.B. senkrecht zur Bewegungsachse des Körpers. Dies geschieht, um das hierauf erfolgende Vorbeileiten an der Antriebsvorrichtung zu ermöglichen, die ebenfalls auf der Bewegungsachse der Körpers angeordnet ist, um diesen anzutreiben. Im Eingangsbereich der Extrusionsvorrichtung, d.h. auf der Frontseite der Extrusionsvorrichtung, an der sich der Masseneinlass befindet, wird das Kühlmittel schräg nach außen abgeleitet, d.h. zum Beispiel unter einem Winkel von 30°, 45° oder 60° mit Bezug auf die Bewegungsachse des Körpers. Das Kühlmittel kann dann an der Frontseite die Extrusionsvorrichtung verlassen und in einer Ableitung von der Extrusionsvorrichtung entfernt werden.

Dies erlaubt es, eine Extrudat effizient zu kühlen und trotzdem einen beweglichen Körper und eine axial angeordnete Extrusionsmassenzuführung bereitstellen zu können.

Die Antriebsvorrichtung kann hierbei auf verschiedene Arten ausgestaltet sein, so lange garantiert ist, dass die entlang der Achse stattfindende Zuführung der Extrusionsmasse nicht behindert wird.

Die Antriebsvorrichtung kann eine auf der Achse liegende Welle umfassen, die an einem Ende derart mit dem Körper verbunden ist, dass dieser bei einer Drehung der Welle entlang der Achse verschoben wird. Zudem kann die Welle an ihrem anderen Ende über zumindest ein Kreuzgelenk oder Zahnrad mit einer Antriebswelle verbunden sein, die bezüglich der Achse schräg nach außen läuft.

Die Bewegung des Körpers wird also mechanisch über ein System von Wellen erzeugt. Die äußere Antriebswelle wird hierbei von einem außerhalb der Extrusionsvorrichtung liegenden Motor angetrieben. Durch das Vorsehen von Kreuzgelenken (Kardanwelle) oder von Kegelzahnrädern oder Kronrädern wird die Drehung der Antriebswelle auf eine schräg zu Antriebswelle stehende Welle der Antriebsvorrichtung übertragen. Diese Welle der Antriebsvorrichtung liegt in Achse mit dem Körper, dem Masseneinlass und dem Massenauslass. Durch Drehung der innenliegenden Welle kann eine Bewegung des Körpers entlang der Achse deshalb leicht bewerkstelligt werden, z.B. durch eine spindelförmige Ausgestaltung der Verbindung von Welle und Körper, die dafür sorgt, dass sich der Körper bei Drehung der Welle auf diese auf- bzw. von dieser abschraubt. Gleichzeitig wird durch die schräge Anordnung der Antriebswelle vermieden, dass sich der Motor zum Antreiben der Welle im Bereich des Masseneinlasses befindet. Es wird also durch einen einfachen Aufbau ermöglicht, gleichzeitig das Extrudat zu kühlen, die Form des Extrudats zu verändern und die Extrusionsmasse möglichst verlustfrei zuzuführen.

Alternativ kann die Antriebsvorrichtung Mittel zum elektrischen, pneumatischen oder hydraulischen Bewegen des Körpers aufweisen und/oder geeignet sein, den Körper mittels Seilzügen oder Kettentrieben zu bewegen. Auch bei innerhalb der Extrusionsvorrichtung liegenden Elektromotoren oder pneumatischen bzw. hydraulischen Vorrichtungen können die zuführenden Stromleitungen oder Hydraulikflüssigkeit bzw. Gas führenden Leitungen so gelegt werden, dass keine Beeinträchtigung der axialen Zuführung der Extrusionsmasse auftritt. Das gleiche gilt für die Umleitung mechanischer Antriebe mittels Seilzügen oder Kettentrieben.

Das Kühlleitungssystem kann geeignet sein, das Kühlmittel in dem zweiten Teil und/oder dem dritten Teil mit Bezug auf die Achse symmetrisch nach außen zu führen. Durch eine symmetrische Führung des Kühlmittels kann der auf die Extrusionsvorrichtung wirkende Einfluss verringert werden.

Die Antriebsvorrichtung und eine Verbindung zwischen Antriebsvorrichtung und Körper können in einem sich entlang der Achse erstreckenden Hohlraum der Extrusionsvorrichtung angeordnet sein, Öffnungen können aus dem Körper, insbesondere mit Bezug auf die Achse symmetrisch, aus dem im Inneren des Körpers angeordneten ersten Teil des Kühlleitungssystems in den Hohlraum führen, wobei der zweite Teil des Kühlleitungssystems die Öffnungen und den Hohlraum umfasst. Durch das Vorsehen eines Hohlraums innerhalb der Extrusionsvorrichtung, in den das Kühlmittel aus dem Körper einströmt, kann das Kühlmittel in einfacher Weise um die in dem Hohlraum angeordnete Antriebsvorrichtung herumgeführt werden. Hierdurch kann Material für Leitungen eingespart werden. Zudem kann gleichzeitig eine Kühlung der Antriebsvorrichtung erreicht werden, ohne dass ein zusätzlicher Kühlstrang notwendig wird.

Der dritte Teil des Kühlleitungssystems kann eine Mehrzahl von Leitungsrohren umfassen, die an einem der Verbindung zwischen Antriebsvorrichtung und Körper entlang der Achse gegenüberliegenden Ende des Hohlraums mit dem Hohlraum verbunden sind und, insbesondere bezüglich der Achse symmetrisch, schräg nach außen führen. Das Kühlmittel wird also in einfacher Weise aus dem Hohlraum der Ableitung zugeführt, ohne mit der Zuführung von Extrusionsmasse entlang der Achse zu interferieren.

Das Kühlleitungssystem kann zum Führen von Luft geeignet ist. Durch die Verwendung von Luft als Kühlmittel kann die Kühlung in kostengünstiger und umweltschonender Weise erfolgen.

Die Extrusionsvorrichtung kann zum Herstellen von Kunststoffrohren geeignet sein, d.h. die von dem Körper in dem Massenauslass freigelassene Querschnittsfläche ist ringförmig. Bei einer entsprechenden, z.B. konischen, Ausgestaltung des Endbereichs des Körpers kann dann durch Verfahren des Körpers die Dicke des Ringes und damit die Dicke der extrudierten Kunststoffrohre verstellt werden, ohne die Extrusion zu stoppen.

Ein Verfahren zur Gewinnung eines Extrudats mittels einer Extrusionsvorrichtung wie sie oben beschrieben wurde weist auf: Führen einer Extrusionsmasse von dem Masseneinlass zu dem Massenauslass zum Erzeugen eines Extrudats und Führen eines Kühlmittels in den ersten Teil des Kühlleitungssystems, von dort in den zweiten Teil des Kühlleitungssystems, von dort in den dritten Teil des Kühlleitungssystems und von dort in die Ableitung für das Kühlmittel, um das Extrudat zu kühlen. Auf diese Weise können effizient gekühlte und damit rasch weiterverarbeitbare Extrudate hergestellt werden.

Die Erfindung wird im Folgenden unter Rückgriff auf die beigefügte Figur im Detail beschrieben. Die folgende Beschreibung ist jedoch nur beispielhaft. Der Gegenstand der Erfindung ist nur durch den Gegenstand der Ansprüche bestimmt. Es zeigt:

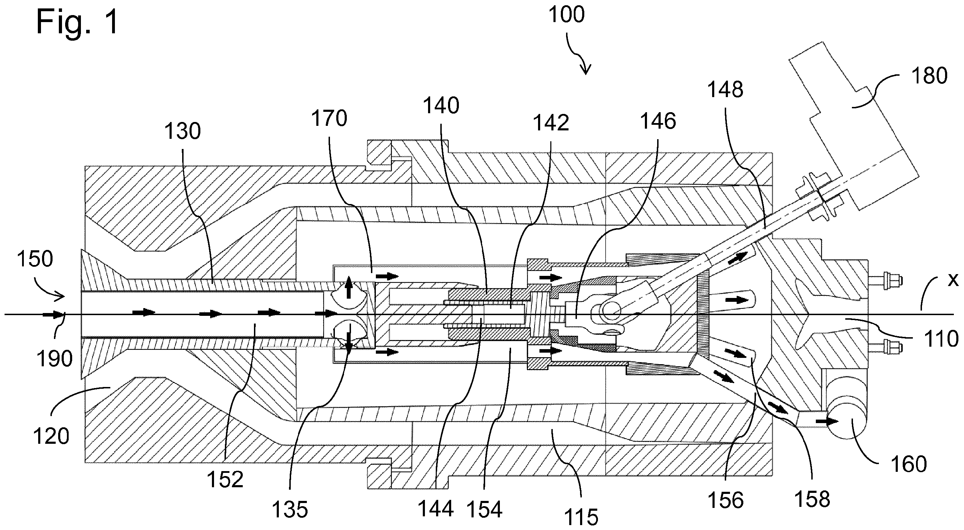

- **Fig. 1**: eine schematische Darstellung einer Extrusionsvorrichtung.

In der Fig. 1 ist schematisch ein Querschnitt durch eine Extrusionsvorrichtung 100 dargestellt. Bei der dargestellten Extrusionsvorrichtung 100 handelt es sich um eine Vorrichtung zum Herstellen von Kunststoffrohren aus einer Extrusionsmasse. Es versteht sich von selbst, dass die unten erläuterten Funktionsprinzipien der Extrusionsvorrichtung 100 auch für Vorrichtungen gelten, die andere Extrudate erzeugen, solange der Aufbau dieser Vorrichtungen dem Gegenstand der Ansprüche entspricht.

In der in der Fig. 1 dargestellten Extrusionsvorrichtung 100 wird eine Extrusionsmasse von rechts über einen Masseneinlass 110 zugeführt, wie er aus dem Stand der Technik bekannt ist. Die Extrusionsmasse wird dann über ein Massenleitungssystem 115 durch die Extrusionsvorrichtung 100 geführt. Wie in der Fig. 1 dargestellt, kann das Massenleitungssystem in mehreren Leitungskanälen durch die Extrusionsvorrichtung 100 führen, die in bestimmten Bereichen auch den gesamten Umfang der Extrusionsvorrichtung 100 umschließen können.

Am linken Ende der in der Fig. 1 dargestellten Extrusionsvorrichtung 100 wird die Extrusionsmasse aus einem Massenauslass 120 ausgestoßen. Der Massenauslass 120 wird hierbei durch eine Öffnung in der Extrusionsvorrichtung 100 gebildet, deren äußere Abmessungen den Außenumfang des aus der Extrusionsvorrichtung 100 austretenden Extrudats bestimmen.

Um Extrudate mit einem innen liegenden Hohlraum zu erzeugen, wie etwa Kunststoffrohre, verfügt die Extrusionsvorrichtung 100 über einen Körper 130 (auch Dorn genannt), der den Massenauslass 120 durchstößt. Die Extrusionsmasse wird am Ende ihres Durchgangs durch die Extrusionsvorrichtung 100 also zwischen der Wand des Massenauslasses 120 und dem Körper 130 hindurchgepresst und dadurch in ihre abschließende Form gebracht. In der Fig. 1 ist die Querschnittsfläche ringförmig, die vom Körper 130 in dem Massenauslass 120 freigelassen wird. Dadurch ist die Extrusionsvorrichtung 100 zur Herstellung von Rohren geeignet. Es versteht sich von selbst, dass durch eine andere Ausgestaltung von Massenauslass 120 und dem den Massenauslass 120 durchstoßendem Ende des Körpers 130 auch eine andere Querschnittsgeometrie des Extrudats erzeugt werden kann.

Um bei fortwährender Förderung der Extrusionsmasse durch das Massenleitungssystem 115 der Extrusionsvorrichtung 100 eine Änderung der Durchtrittsfläche der Extrusionsmasse durch den Massenauslass 120 zu ermöglichen, ist der Körper 130 in der Extrusionsvorrichtung 100 beweglich gelagert. So verringert sich z.B. beim Einziehen des Körpers 130 in die Extrusionsvorrichtung 100 (d.h. bei Bewegung des Körpers 130 nach rechts in der Fig. 1) der Abstand zwischen dem konusförmigen Ende des Körpers 130 und der ebenfalls konusförmigen Wand des Massenauslasses 120. Dadurch kann die Wandstärke der extrudierten Rohre verringert werden. Durch die entgegengesetzte Bewegung wird die Wandstärke vergrößert.

Der Körper 130 wird hierzu entlang einer Achse x bewegt, auf der auch der Masseneinlass 110 und der Massenauslass 120 angeordnet sind. Dies erlaubt es, die Extrusionsmasse in symmetrischer Weise durch das Massenleitungssystem 115 zu führen, wodurch Druckverluste oder ungleichmäßige Massenverteilungen oder -aufenthaltsdauern im Massenleitungssystem 115 vermieden werden. Würde der Masseneinlass 110 nämlich bezüglich der Achse x in einem Winkel oder mit einem Versatz angeordnet sein, wäre es notwendig, die Extrusionsmasse über ungleich lange Wege bzw. längere Wege und Umlenkungen zum Massenauslass 120 zu führen, was durch die axiale Anordnung von Masseneinlass 110 und Massenauslass 120 vermieden werden kann.

In der Mitte der Extrusionsvorrichtung 100, d.h. zwischen dem Körper 130 und dem Masseneinlass 110 ist eine Antriebsvorrichtung 140 angeordnet, die dazu dient, den Körper 130 gegenüber dem Massenauslass 130 und entlang der Achse x axial zu bewegen. Auch die Antriebsvorrichtung 140 ist auf der Achse x angeordnet, um einen radial symmetrischen Aufbau des Massenleitungssystems 115 zu ermöglichen. Wie in der Fig. 1 gezeigt läuft das Massenleitungssystem 115 also um die auf der zentralen Achse x angeordneten Bauteile Antriebsvorrichtung 140 und Körper 130 herum.

Die Antriebsvorrichtung 140 ist hierbei derart angeordnet und ausgebildet, dass sie einer Zuführung der Extrusionsmasse zum Massenleitungssystem 115 durch den ebenfalls auf der Achse x angeordneten Masseneinlass 110 nicht hinderlich ist. Die Antriebsvorrichtung 140 kann hierbei verschieden ausgestaltet sein. Wie unten im Detail beschrieben, ist in der Fig. 1 eine über einen außen an oder außerhalb der Extrusionsvorrichtung 100 angeordneten Motor betriebene Kardanwelle die Antriebsvorrichtung 140. Die Antriebsvorrichtung 140 ist aber nicht auf dieses Beispiel beschränkt.

Zum Beispiel kann es sich bei der Antriebsvorrichtung 140 auch um jede Art von elektrischem, hydraulischen oder pneumatischen Antrieb handeln, der in der Lage ist, den Körper 130 entlang der Achse x zu bewegen. Es kann sich z.B. um die Kombination eines Elektromotors mit einer Spindel handeln, wobei der Elektromotor die mit dem Körper 130 verbundene Spindel derart antreibt, dass sie den Körper 130 durch ein- und ausschrauben in diesen bewegt. Alternativ können auch Hydraulik- oder Pneumatikzylinder vorhanden sein, die den Körper 130 in an sich bekannter Weise verschieben.

Die Zuleitungen für diese Art von Antriebsvorrichtungen 140 (d.h. Kabel oder Hydraulikflüssigkeit oder Gas führende Leitungen) können leicht derart angeordnet werden, dass sie weder die axiale Anordnung von Masseneinlass 110, Antriebsvorrichtung 140, Körper 130 und Massenauslass 120 noch eine mögliche radialsymmetrische Ausgestaltung des Massenleitungssystems 115 beeinträchtigen.

Ebenso kann eine Verschiebung des Körpers 130 auch über mechanische Kraftumfenkungskomponenten von außen bewerkstelligt werden, wie etwa Seilzüge oder Kettentriebe. Die Antriebsvorrichtung 140 besteht dann aus den Anschlüssen dieser Kraftumlenkungskomponenten an den Körper 130. Die Kraftumlenkungskomponenten werden wiederum derart durch die Extrusionsvorrichtung geführt, dass keine Beeinträchtigung der gewünschten Anordnung von Masseneinlass 110, Körper 130, Massenauslass 120 und Massenleitungssystem 115 auftritt.

Wie in der Fig. 1 gezeigt kann der Antrieb des Körpers 130 aber auch über ein Wellensystem erfolgen, in dem eine Welle 142 der Antriebsvorrichtung 140 über eine mit einem Motor 180 verbundene Antriebswelle 148 angetrieben wird.

Die Welle 142 ist hierbei mit einem ersten Ende 144 mit dem Körper 130 derart verbunden, dass eine Drehung der Welle 142 zu einer axialen Verschiebung des Körpers 130 führt. Derartige Verbindungen sind aus dem Stand der Technik bekannt. Ein Beispiel hierfür ist eine am Ende 144 der Welle 142 angebrachte Schraube, die in einem entsprechenden, am Ende des Körpers 130 angebrachten Gewinde läuft. Da die Welle 142 feststeht, führt eine Drehung der Welle 142 je nach Drehsinn dazu, dass sich die Schraube in das Gewinde ein- oder ausschraubt und dadurch den Körper 130 auf die Welle 142 zu oder von ihr weg bewegt.

Das dem ersten Ende 144 der Welle 142 gegenüber liegende Ende 146 der Welle 142 ist mit der Antriebswelle 148 derart verbunden, dass Drehungen der Antriebswelle 148 auf die Welle 142 übertragen werden. Um die vorteilhafte axiale Anordnung von Masseneinlass 110, Körper 130 und Massenauslass 120 zu ermöglichen, läuft die Antriebswelle 148 mit Bezug auf die Achse x schräg nach außen, z.B. unter einem Winkel aus dem Bereich von 20° bis 70°, z.B. unter 30°, 45° oder 60°. Die Antriebswelle 148 ist hierbei in einem Bereich angeordnet, in dem die gewünschte Führung des Massenleitungssystems 115 nicht abträglich beeinträchtig wird, also insbesondere im dem Masseneinlass 110 benachbarten Teil der Extrusionsvorrichtung 100, in dem das Massenleitungssystem 115 aus mehreren Einzelleitungen bestehen kann, die er erlauben, die Antriebswelle 148 zwischen diesen hindurch zu führen.

Das bezüglich der Achse x schräge Anordnen der Antriebswelle 148 erlaubt es also, einen leistungsstarken, wenig fehleranfälligen und kostengünstig zu konstruierenden Antrieb für den Körper 130 bereitzustellen, ohne die vorteilhafte axiale Anordnung von Masseneinlass 110, Körper 130 und Massemauslass 120 zu beeinträchtigen.

Wie in der Fig. 1 gezeigt kann eine Verbindung zwischen Antriebswelle 148 und Welle 142 durch ein oder mehrere Kreuzgelenke erfolgen (Kardanwelle). Es ist aber auch möglich, die aneinander stoßenden Enden von Welle 142 und Antriebswelle 148 über ein Winkelgetriebe mit Kegelrädern und/oder Kronrädern zu verbinden. In diesem Fall ist es auch möglich, die Antriebswelle 148 mit einem beliebigen Winkel zwischen 0° und 180° anzuordnen, solange dies die gewünschte Anordnung der übrigen Komponenten der Extrusionsvorrichtung 100 nicht beeinträchtigt.

Als dritte Hauptkomponente neben dem eigentlichen Extrusionsstrang und dem beweglichen Körper 130 und dessen Antrieb umfasst die Extrusionsvorrichtung 100 ein Kühlleitungssystem 150 mit dem ein Kühlmittel, bevorzugter Weise ein Kühlgas wie etwa Luft, entgegen der Fließrichtung der Extrusionsmasse durch den Körper 130 geleitet werden kann. Der Fluss des Kühlmittels durch die Extrusionsvorrichtung 100 ist in der Fig. 1 durch die Pfeile 190 gekennzeichnet. Alternativ kann das Kühlmittel das Kühlleitungssystem 150 aber auch gleichläufig zur Fließrichtung der Extrusionsmasse durchlaufen.

Wie in der Fig. 1 gezeigt ist der Innenraum des Körpers 130 geeignet, das von außerhalb der Extrusionsvorrichtung 100 zugeführte Kühlmittel in das Innere der Extrusionsvorrichtung 100 zu leiten. Der Körper 130 weist hierzu entsprechende Leitungen auf oder ist hohl gefertigt, d.h. er besteht nur aus einer Wand, deren Dicke ausreichend ist, um den durch die Extrusionsmasse auf den Körper 130 ausgeübten Kräfte zu widerstehen.

Das Kühlmittel strömt also über den Innenraum des Extrudats, wie etwa eines extrudierten Rohres, in den Körper 130. Dadurch ist es möglich, das Extrudat beim Verlassen der Extrusionsvorrichtung 100 nicht nur von außen, sondern auch von innen zu kühlen. Zudem kann auch das im Massenauslass 120 angeordnete Ende des Körpers 130 gekühlt, sodass die Extrusionsmasse bereits beim Durchtritt durch den Massenauslass 120 gekühlt wird, wodurch das Extrudat schneller stabil und weiterverarbeitbar wird.

Der Innenbereich des Körpers 130 entspricht also einem ersten Teil 152 des Kühlleitungssystems 150, in dem das Kühlmittel entlang der Achse x geführt wird, um eine Kühlung des Extrudats zu ermöglichen. Zusätzlich kann in den Körper 130 eine Hülse eingeschoben sein, die verhindert, dass der Körper 130 durch das ihn durchströmende Kühlmittel abgekühlt wird.

Im Anschluss an diesen ersten Teil 152 des Kühlleitungssystems 150 schließen sich ein zweiter Teil 154 und ein dritter Teil 156 an, die dazu dienen, das Kühlmittel durch die Extrusionsvorrichtung 100 einer Ableitung 160 für das Kühlmittel zuzuführen, ohne die gewünschte Anordnung der übrigen Komponenten der Extrusionsvorrichtung 100 zu beeinträchtigen. Insbesondere soll die vorteilhafte axiale Anordnung von Masseneinlass 110, Körper 130 und Massenauslass 120 nicht beeinträchtigt werden.

Im zweiten Teil 154 des Kühlleitungssystems 150 wird das Kühlmittel zunächst, z.B. radial, weg von der Achse x nach außen geführt, um es hierauf an der Antriebsvorrichtung 140 vorbeizuführen. Dies ist notwendig, da die vorteilhafte Beweglichkeit des Körpers 130 entlang der Achse x dazu führt, dass auch die Antriebsvorrichtung 140 oder zumindest Teile davon auf der Achse x angeordnet sind.

Eine strukturell besonders einfache Ausgestaltung des zweiten Teils 154 des Kühlleitungssystems 150 ist in der Fig. 1 dargestellt. Hier tritt das Kühlmittel aus im innenliegenden Ende des Körpers 130 angeordneten Öffnungen 135, vorzugsweise radialsymmetrisch und/oder senkrecht zur Achse x, aus dem Körper 130 in einen Hohlraum 170 aus, der sich im zentralen Bereich der Extrusionsvorrichtung 100 befindet. In dem Hohlraum 170 befindet sich auf dafür geeigneten Haltevorrichtungen die Antriebsvorrichtung 140. Zum Beispiel kann die Welle 142 allein durch die Verbindung zum Körper 130 und zur stabil gelagerten Antriebswelle 148 in dem Hohlraum 170 gehalten werden. Bei Bedarf können auch weitere, prinzipiell aus dem Stand der Technik bekannte Mittel zum Stützen der Antriebsvorrichtung 140 in dem Hohlraum 170 vorhanden sein, insbesondere bei einer anderen Ausgestaltung der Antriebsvorrichtung. Beispiele hierfür können durch Streben fixierte Kugellager oder für feststehende Motoren einfache Verstrebungen sein.

Das Kühlmittel kann also nach dem Austritt aus den Öffnungen 135 des Körpers 130 durch den Hohlraum 170 weiter In Richtung des Masseneinlasses 110 strömen. Hierbei kann zum Beispiel auch eine Kühlung der im Hohlraum 170 angeordneten Antriebsvorrichtung 140 erfolgen. Alternativ kann das Kühlmittel aber auch über Rohrleitungen oder dergleichen an der Antriebsvorrichtung 140 vorbeigeleitet werden. Dies stellt zwar größere Anforderungen an die Anordnung der einzelnen Komponenten der Extrusionsvorrichtung 100 und führt zu mehr Materialeinsatz, kann aber z.B. mit Bezug auf die Dichtigkeit des Kühlleitungssystems 150 von Vorteil sein.

An den zweiten Teil 154 des Kühlleitungssystems 150 schließt sich der dritte Teil 156 des Kühlleitungssystems 150 an. In diesem dritten Teil 156, der sich bereits in der Nähe des Masseneinlasses 110 und des davon wegführenden Teils des Massenleitungssystems 115 befindet, wird das Kühlmittel, vorzugsweise radialsymmetrisch, von der Achse x weg schräg nach außen geführt, z.B. unter einem Winkel im Bereich zwischen 20° und 70°, z.B. 30°, 45° oder 60°. Dies erlaubt es, das Kühlmittel seitlich des axial angeordneten Masseneinlasses 110 aus der Extrusionsvorrichtung 100 herauszuführen und in die Ableitung 160 einzuspeisen.

Es wird also ermöglicht, das Kühlmittel für eine Innenkühlung des Extrudats und des Körpers 130 durch die gesamte Extrusionsvorrichtung 100 zu führen, ohne die vorteilhafte Anordnung von Extrusionsstrang und beweglichem Körper 130 zu beeinträchtigen.

Wie in der Fig. 1 gezeigt, kann der dritte Teil 156 des Kühlleitungssystems 150 aus einer Mehrzahl von vorzugsweise radialsymmetrisch angeordneten Leitungsrohren 158 bestehen, die aus dem Hohlraum 170 in ein Ableitungsrohr der Ableitung 160 führen, das um den Masseneinlass 110 herum angeordnet ist. Dies erlaubt eine effiziente Abführung des Kühlmittels.

Mit der Extrusionsvorrichtung 100 kann also durch Führen einer Extrusionsmasse vom Masseneinlass 110 zum Massenauslass 120 im Zusammenspiel mit dem beweglichen Körper 130 ein Extrudat erzeugt werden, dessen Form sich durch Bewegungen des Körpers 130 während der Extrusion verändern lässt. Gleichzeitig kann durch ein zur Fließrichtung der Extrusion gegenläufiges oder gleichläufiges Durchströmen der Extrusionsvorrichtung 100 und insbesondere des Körpers 130 eine Innenkühlung des Extrudats bereitgestellt werden. Durch die Anpassung der Anordnung des Antriebsstrangs für die Bewegung des Körpers 130 an die vorteilhafte axiale Anordnung von Masseneinlass 110, Körper 130 und Massenauslass 120 sowie durch die sukzessive Aufweitung des Strömungspfades des Kühlmittels weg von der Achse x, kann dies erreicht werden, ohne Nachteile hinsichtlich der Förderung der Extrusionsmasse durch die Extrusionsvorrichtung 100 zu erzeugen.

### Bezugszeichenliste

- 100: Extrusionsvorrichtung
- 110: Masseneinlass
- 115: Massenleitungssystem
- 120: Massenauslass
- 130: Körper
- 135: Öffnungen im Körper
- 140: Antriebsvorrichtung
- 142: Welle
- 144: ein Ende der Welle
- 146: anderes Ende der Welle
- 148: Antriebswelle
- 150: Kühlleitungssystems
- 152: erster Teil des Kühlleitungssystems
- 154: zweiter Teil des Kühlleitungssystems
- 156: dritter Teil des Kühlleitungssystems
- 160: Ableitung
- 170: Hohlraum
- 180: Motor
- 190: Strömungspfad des Kühlmittels
- X: Achse

## Patentansprüche

1. Extrusionsvorrichtung (100) mit
einem Masseneinlass (110) zum Zuführen einer Extrusionsmasse in die Extrusionsvorrichtung (100);
einem dem Masseneinlass (110) entlang einer Achse (x) gegenüber angeordneten Massenauslass (120) zum Ausstoßen der Extrusionsmasse aus der Extrusionsvorrichtung (100);
einem Massenleitungssystem (115) zum Führen der Extrusionsmasse von dem Masseneinlass (110) zu dem Massenauslass (120);
einem auf der Achse (x) angeordneten und entlang der Achse (x) bewegbaren Körper (130), der durch den Massenauslass (120) hindurchtritt und derart ausgebildet ist, dass sich bei Bewegen des Körpers (130) entlang der Achse (x) eine Querschnittsfläche verändert, durch die die Extrusionsmasse aus dem Massenauslass (120) ausgestoßen wird;
einer entlang der Achse (x) angeordneten Antriebsvorrichtung (140) zum Bewegen des Körpers (130) entlang der Achse (x);
einem Kühlleitungssystem (150) zum Führen von Kühlmittel;
**dadurch gekennzeichnet, dass**
ein erster Teil (152) des Kühlleitungssystems (150) im Inneren des Körpers (130) angeordnet ist und geeignet ist, das Kühlmittel entlang der Achse (x) zu führen;
ein zweiter Teil (154) des Kühlleitungssystems (150) geeignet ist, das Kühlmittel von der Achse (x) weg aus dem Körper (130) herauszuführen und um die Antriebsvorrichtung (140) herum zu leiten;
ein dritter Teil (156) des Kühlleitungssystems (150) geeignet ist, das Kühlmittel schräg zur Achse (x) nach außen in eine Ableitung (160) für das Kühlmittel zu führen; und
entgegen einer Fließrichtung der Extrusionsmasse von dem Masseneinlass (110) zu dem Massenauslass (120) der zweite Teil (154) des Kühlleitungssystems (150) an den ersten Teil (152) des Kühlleitungssystems (150) anschließt und der dritte Teil (156) des Kühlleitungssystems (150) an den zweiten Teil (154) des Kühlleitungssystems (150) anschließt.

2. Extrusionsvorrichtung (100) nach Anspruch 1, wobei
die Antriebsvorrichtung (140) eine auf der Achse (x) liegende Welle (142) umfasst, die an einem Ende (144) derart mit dem Körper (130) verbunden ist, dass dieser bei einer Drehung der Welle (142) entlang der Achse (x) verschoben wird; und
die Welle (142) an ihrem anderen Ende (146) über zumindest ein Kreuzgelenk oder Zahnrad mit einer Antriebswelle (148) verbunden ist, die bezüglich der Achse (x) schräg nach außen läuft.

3. Extrusionsvorrichtung (100) nach Anspruch 1, wobei
die Antriebsvorrichtung (140) Mittel zum elektrischen, pneumatischen oder hydraulischen Bewegen des Körpers (130) aufweist; und/oder
die Antriebsvorrichtung (140) geeignet ist, den Körper (130) mittels Seilzügen oder Kettentrieben zu bewegen.

4. Extrusionsvorrichtung (100) nach einem der vorherigen Ansprüche, wobei
das Kühlleitungssystem (150) geeignet ist, das Kühlmittel in dem zweiten Teil (154) und/oder dem dritten Teil (156) mit Bezug auf die Achse (x) symmetrisch nach außen zu führen.

5. Extrusionsvorrichtung (100) nach einem der vorherigen Ansprüchen, wobei
die Antriebsvorrichtung (140) und eine Verbindung zwischen Antriebsvorrichtung (140) und Körper (130) in einem sich entlang der Achse (x) erstreckenden Hohlraum (170) der Extrusionsvorrichtung (100) angeordnet sind;
Öffnungen (135) aus dem Körper (130), insbesondere mit Bezug auf die Achse symmetrisch, aus dem im Inneren des Körpers (130) angeordneten ersten Teil (152) des Kühlleitungssystems (150) in den Hohlraum (160) führen; und
der zweite Teil (154) des Kühlleitungssystems die Öffnungen (135) und den Hohlraum (170) umfasst.

6. Extrusionsvorrichtung (100) nach Anspruch 5, wobei
der dritte Teil (156) des Kühlleitungssystems (150) eine Mehrzahl von Leitungsrohren (158) umfasst, die an einem der Verbindung zwischen Antriebsvorrichtung (140) und Körper (130) entlang der Achse (x) gegenüberliegenden Ende des Hohlraums (170) mit dem Hohlraum (170) verbunden sind und, insbesondere bezüglich der Achse (x) symmetrisch, schräg nach außen führen.

7. Extrusionsvorrichtung (100) nach einem der vorherigen Ansprüche, wobei das Kühlleitungssystem (150) zum Führen von Luft geeignet ist.

8. Extrusionsvorrichtung (100) nach einem der vorherigen Ansprüche, wobei
die Extrusionsvorrichtung (100) zum Herstellen von Kunststoffrohren geeignet ist.

9. Verfahren zur Gewinnung eines Extrudats mittels der Extrusionsvorrichtung (100) nach einem der vorherigen Ansprüche, aufweisend:
Führen einer Extrusionsmasse von dem Masseneinlass (110) zu dem Massenauslass (120) zum Erzeugen eines Extrudats; und
Führen eines Kühlmittels in den ersten Teil (152) des Kühlleitungssystems (150), von dort in den zweiten Teil (154) des Kühlleitungssystems (150), von dort in den dritten Teil (156) des Kühlleitungssystems (150) und von dort in die Ableitung (160) für das Kühlmittel, um das Extrudat zu kühlen.

## Claims

1. An extrusion device (100) with
a material inlet (110) for feeding an extrusion material into the extrusion device (100);
a material outlet (120), which is arranged opposite the material inlet (110) along an axis (x), in order to expel the extrusion material from the extrusion device (100);
a material guidance system (115) for guiding the extrusion material from the material inlet (110) to the material outlet (120);
a body (130), which is arranged on the axis (x) and is movable along the axis (x), which passes through the material outlet (120) and is designed in such a way that, as the body (130) moves along the axis (x), a cross-sectional area through which the extrusion material is expelled from the material outlet (120) changes;
a drive device (140), arranged along the axis (x), for moving the body (130) along the axis (x);
a cooling line system (150) for guiding coolant;
**characterized in that**
a first part (152) of the cooling line system (150) is arranged in the interior of the body (130) and is suitable for guiding the coolant along the axis (x);
a second part (154) of the cooling line system (150) is suitable for guiding the coolant out of the body (130) away from the axis (x) and for conducting said coolant around the drive device (140);
a third part (156) of the cooling line system (150) is suitable for guiding the coolant outwardly into a discharge line (160) for the coolant obliquely to the axis (x); and
against a flow direction of the extrusion material from the material inlet (110) to the material outlet (120) the second part (154) of the cooling line system (150) adjoins the first part (152) of the cooling line system (150), and the third part (156) of the cooling line system (150) adjoins the second part (154) of the cooling line system (150).

2. The extrusion device (100) according to Claim 1, wherein
the drive device (140) comprises a shaft (142) lying on the axis (x), which shaft is connected at one end (144) with the body (130) in such a way that the latter, on a rotation of the shaft (142), is displaced along the axis (x); and
the shaft (142) at its other end (146) is connected via at least one universal joint or toothed wheel with a drive shaft (148), which runs obliquely outwardly with respect to the axis (x).

3. The extrusion device (100) according to Claim 1, wherein
the drive device (140) has means for the electric, pneumatic or hydraulic moving of the body (130); and/or
the drive device (140) is suitable for moving the body (130) by means of cables or chain drives.

4. The extrusion device (100) according to one of the preceding claims, wherein
the cooling line system (150) is suitable for guiding the coolant in the second part (154) and/or in the third part (156) symmetrically outwards with respect to the axis (x).

5. The extrusion device (100) according to one of the preceding claims, wherein
the drive device (140) and a connection between drive device (140) and body (130) are arranged in a cavity (170) of the extrusion device (100) extending along the axis (x);
openings (135) out of the body (130), in particular with respect to the axis, lead out of the first part (152) of the cooling line system (150), arranged in the interior of the body (130), into the cavity (160); and
the second part (154) of the cooling line system comprises the openings (135) and the cavity (170).

6. The extrusion device (100) according to Claim 5, wherein
the third part (156) of the cooling line system (150) comprises a plurality of conduits (158) which, at an end of the cavity (170) lying opposite the connection between drive device (140) and body (130) along the axis (x), are connected with the cavity (170) and lead obliquely outwards, in particular symmetrically with respect to the axis (x).

7. The extrusion device (100) according to one of the preceding claims, wherein
the cooling line system (150) is suitable for the guiding of air.

8. The extrusion device (100) according to one of the preceding claims, wherein
the extrusion device (100) is suitable for producing plastic pipes.

9. A method for obtaining an extrudate by means of the extrusion device (100) according to one of the preceding claims, comprising:
guiding an extrusion material from the material inlet (110) to the material outlet (120) for producing an extrudate; and
guiding a coolant into the first part (152) of the cooling line system (150), from there into the second part (154) of the cooling line system (150), from there into the third part (156) of the cooling line system (150) and from there into the discharge line (160) for the coolant, in order to cool the extrudate.

## Revendications

1. Dispositif d'extrusion (100) comprenant
une entrée de masse (110) pour amener une masse d'extrusion dans le dispositif d'extrusion (100) ;
une sortie de masse (120) disposée à l'opposé de l'entrée de masse (110) le long d'un axe (x) pour faire sortir la masse d'extrusion du dispositif d'extrusion (100) ;
un système de lignes de masse (115) pour guider la masse d'extrusion de l'entrée de masse (110) à la sortie de masse (120) ;
un corps (130) disposé sur l'axe (x) et mobile le long de l'axe (x) qui passe à travers la sortie de masse (120) et est ainsi conçu que lorsque le corps (130) se déplace le long de l'axe (x), une aire transversale se modifie, à travers laquelle la masse d'extrusion est poussée hors de la sortie de masse (120) ;
un dispositif d'entraînement (140) disposé le long de l'axe (x) pour déplacer le corps (130) le long de l'axe (x) ;
un système de lignes de refroidissement (150) pour guider du fluide réfrigérant ;
**caractérisé en ce que** :
une première partie (152) du système de lignes de refroidissement (150) est disposée à l'intérieur du corps (130) et est appropriée pour guider le fluide réfrigérant le long de l'axe (x) ;
une deuxième partie (154) du système de lignes de refroidissement (150) est appropriée pour guider le fluide réfrigérant de l'axe (x) hors du corps (130) et le guider autour du dispositif d'entraînement (140) ;
une troisième partie (156) du système de lignes de refroidissement (150) est appropriée pour guider le fluide réfrigérant de biais par rapport à l'axe (x) vers l'extérieur dans une ligne de sortie (160) pour le réfrigérant ; et
contre un sens d'écoulement de la masse d'extrusion de l'entrée de masse (110) à la sortie de masse (120), la deuxième partie (154) du système de lignes de refroidissement (150) se raccorde à la première parie (152) du système de lignes de refroidissement (150) et la troisième partie (156) du système de lignes de refroidissement (150) se raccorde à la deuxième partie (154) du système de lignes de refroidissement (150).

2. Dispositif d'extrusion (100) selon la revendication 1, dans lequel
le dispositif d'entraînement (140) comprend un arbre (142) reposant sur l'axe (x) qui est relié par une extrémité (144) au corps (130) de telle sorte que celui-ci est poussé le long de l'axe (x) lors d'une rotation de l'arbre (142) ; et
l'arbre (142) est relié par son autre extrémité (146) par au moins un joint à croisillon ou une roue dentée à un arbre d'entraînement (148) qui part en biais vers l'extérieur par rapport à l'axe (x).

3. Dispositif d'extrusion (100) selon la revendication 1, dans lequel
le dispositif d'entraînement (140) comprend des moyens pour le déplacement électrique, pneumatique ou hydraulique du corps (130) ; et/ou
le dispositif d'entraînement (140) est approprié pour déplacer le corps (130) par des câbles sous graine ou des transmissions par chaîne.

4. Dispositif d'extrusion (100) selon l'une des revendications précédentes, dans lequel
le système de lignes de refroidissement (150) est approprié pour guider le fluide réfrigérant symétriquement vers l'extérieur par rapport à l'axe (x), dans la deuxième partie (154) et/ou la troisième partie (156).

5. Dispositif d'extrusion (100) selon l'une des revendications précédentes, dans lequel
le dispositif d'entraînement (140) et une liaison entre le dispositif d'entraînement (140) et le corps (130) sont disposés dans une cavité (170) du dispositif d'extrusion (100) s'étendant le long de l'axe (x) ;
des ouvertures (135) guident hors du corps (130), en particulier symétriquement par rapport à l'axe, hors de la première partie (152) du système de lignes de refroidissement (150) disposée à l'intérieur du corps (130) jusque dans la cavité (160) ; et
la deuxième partie (154) du système de lignes de refroidissement comprend les ouvertures (135) et la cavité (170).

6. Dispositif d'extrusion (100) selon la revendication 5, dans lequel
la troisième partie (156) du système de lignes de refroidissement (150) comprend une pluralité de tubes (158) qui sont reliés à la cavité (170) par une extrémité de la cavité (170) opposée à la liaison entre le dispositif d'entraînement (140) et le corps (130) le long de l'axe (x) et, guident de biais vers l'extérieur, en particulier par rapport à l'axe (x).

7. Dispositif d'extrusion (100) selon l'une des revendications précédentes,
dans lequel le système de lignes de refroidissement (150) est approprié pour guider l'air.

8. Dispositif d'extrusion (100) selon l'une des revendications précédentes,
dans lequel le dispositif d'extrusion (100) est approprié pour fabriquer des tuyaux en plastique.

9. Procédé de récupération d'un produit extrudé au moyen du dispositif d'extrusion (100) selon l'une des revendications précédentes, présentant :
de guider une masse d'extrusion de l'entrée de masse (110) vers la sortie de masse (120) pour produire un produit extrudé ; et
de guider un fluide réfrigérant dans la première partie (152) du système de lignes de refroidissement (150), de là dans la deuxième partie (154) du système de lignes de refroidissement (150), de là dans la troisième partie (156) du système de lignes de refroidissement (150) et de là dans la ligne de sortie (160) pour le réfrigérant, pour refroidir le produit extrudé.
